# EUROPEAN PATENT APPLICATION

(11) **EP 4 230 555 A1**
(43) Date of publication of application: **23.08.2023**
(21) Application number: 21879718.1
(22) Date of filing: 28.07.2021
(51) Int. Cl.: B65G 54/02, G01N 35/04

(54) **SPECIMEN CONTAINER CARRIER AND SPECIMEN TRANSPORT DEVICE**

(30) Priority: 14.10.2020 JP 2020173170
(71) Applicant: HITACHI HIGH-TECH CORPORATION, Tokyo 105-6409 (JP)
(72) Inventor: AZUMA Shinji, Tokyo 105-6409 (JP); WATANABE Hiroshi, Tokyo 105-6409 (JP)
(74) Representative: Strehl Schübel-Hopf & Partner
(86) International application number: PCT/JP2021/027953
(87) International publication number: WO 2022/079976

(57) **Abstract**

There are provided a sample container carrier and a sample conveying device capable of reducing a frictional force generated between a container carrier and a conveying plane during conveyance of the container carrier as compared with a case in the related art.

In a conveying device 700, a container carrier 100 includes: a magnetic material body 105; a grip 101 that supports a sample container 150; and a rotating body 111 that is disposed so as to be in contact with a conveying surface 120 for conveying the container carrier 100 and rotates as the container carrier 100 moves, in which the container carrier is conveyed by an electromagnetic force acting on the magnetic material body 105.

## Description

### Technical Field

The present invention relates to a container carrier in which a sample is stored in a sample test automation system.

### Background Art

PTL 1 discloses an example of a laboratory sample conveying system and an operation method corresponding thereto configured to be very flexible and to provide high conveying performance, the example including: a plurality of container carriers each including at least one magnetically active device, preferably at least one permanent magnet, and adapted to convey a sample container; a conveying plane adapted to convey the container carrier; and a plurality of electromagnetic actuators stationarily disposed below the conveying plane and adapted to move the container carrier on the conveying plane by applying a magnetic force to the container carrier.

### Citation List

### Patent Literature

PTL 1: JP2017-77971A

### Summary of Invention

### Technical Problem

Since sample analysis is considered to be important due to advancement of medical care, labor saving and acceleration of a test using automatically-driven equipment have been underway in a sample test for the purpose of diagnosis in the medical field.

As part of this circumstance, in a sample test automation system, a pre-processing device, an automatic analyzing device, and a post-processing device are connected to each other by a sample conveying device, and full automation of work related to sample analysis processing has been underway.

In such a sample conveying device, in order to improve analytical processing capacity of a sample analysis system, high-speed sample conveyance, simultaneous conveyance of a large number of samples, and conveyance in a plurality of directions are requested.

In the sample conveyance in such an automated system, for example, a container carrier capable of loading one sample container containing a sample is used. As an example, known is a method in which a plurality of electromagnets fixed and disposed below a conveying surface respectively generate magnetic fields to attract or repel a magnet in the container carrier, thereby allowing the container carrier to slide on the conveying surface. This conveying method implements not only one-dimensional sample conveyance but also two-dimensional sample conveyance.

As part of such a technique, there is the above-described technique disclosed in PTL 1.

However, in the technique disclosed in PTL 1, the container carrier moves relatively on the conveying plane in a state in which a bottom portion of the container carrier contacts the conveying plane. Here, during conveyance of the container carrier, there is a problem in that a driving force is reduced by friction generated between the bottom portion of the container carrier and the conveying plane. Accordingly, it is desired to solve this problem.

Therefore, an object of the present invention is to provide a sample container carrier and a sample conveying device capable of reducing a frictional force generated between a container carrier and a conveying plane during conveyance of the container carrier as compared with a case in the related art.

### Solution to Problem

The present invention includes a plurality of means for solving the above-described problems, and one example thereof includes a sample container carrier that grips a sample container containing a sample, the sample container carrier including a magnetic material body, a grip that supports the sample container, and a rotating body that is disposed so as to be in contact with a conveying surface for conveying the sample container carrier and rotates as the sample container carrier moves, in which the sample container carrier is conveyed by an electromagnetic force acting on the magnetic material body.

### Advantageous Effects of Invention

According to the present invention, it is possible to reduce a frictional force generated between a container carrier and a conveying plane during conveyance of the container carrier as compared with a case in the related art. Problems, configurations, and effects other than those described above will be clarified by descriptions of the following embodiments.

### Brief Description of Drawings

[Fig. 1] Fig. 1 is a plan view illustrating a schematic configuration of an entire sample test automation system including a sample conveying device according to a first embodiment of the present invention.
[Fig. 2] Fig. 2 is a diagram illustrating a configuration of the sample conveying device according to the first embodiment.
[Fig. 3] Fig. 3 is a view of the configuration of a sample container carrier of the first embodiment as viewed from the bottom surface side.
[Fig. 4] Fig. 4 is a view of another configuration of the sample container carrier of the first embodiment as viewed from the bottom surface side.
[Fig. 5] Fig. 5 is a graph illustrating the relationship between the friction coefficient and the driving force when the applied current values are the same.
[Fig. 6] Fig. 6 is a diagram illustrating a configuration of a sample conveying device according to a second embodiment of the present invention.
[Fig. 7] Fig. 7 is a view of the configuration of the sample container carrier of the second embodiment as viewed from the bottom surface.
[Fig. 8] Fig. 8 is a diagram illustrating an operation principle of the sample container carrier of the second embodiment as viewed from the bottom surface side of the container carrier.
[Fig. 9] Fig. 9 is a diagram illustrating the operation principle of the sample container carrier of the second embodiment as viewed from the bottom surface side of the container carrier.

### Description of Embodiments

Embodiments of a sample container carrier and a sample conveying device of the present invention will be described below with reference to the drawings. In the drawings used in this specification, the same or corresponding components will be denoted by the same or similar reference numerals, and repeated descriptions of these components may be omitted.

### <First embodiment>

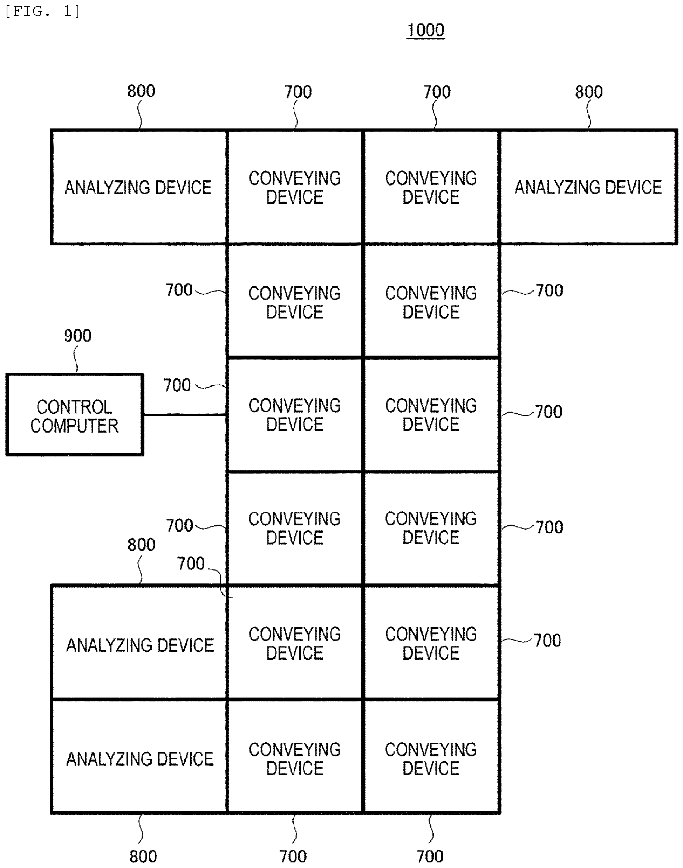

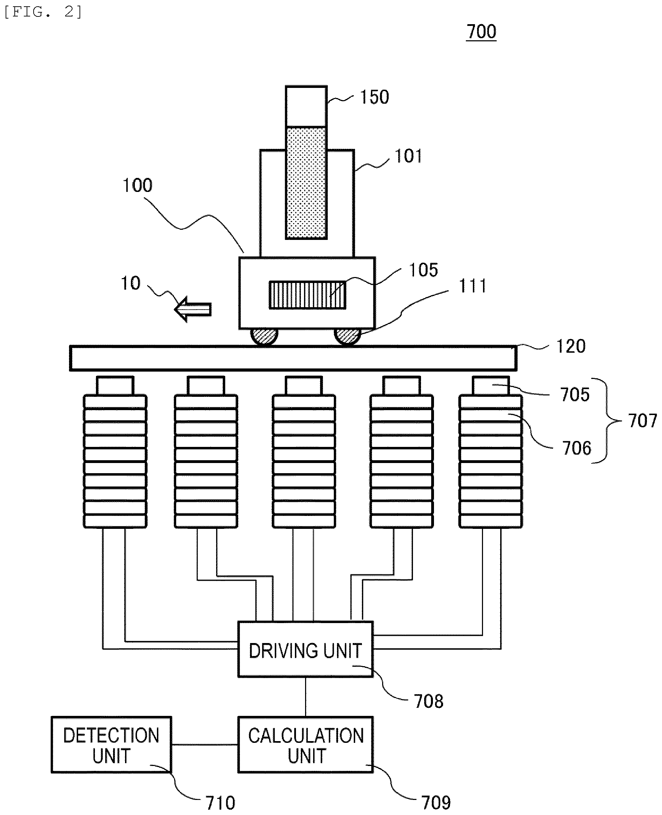

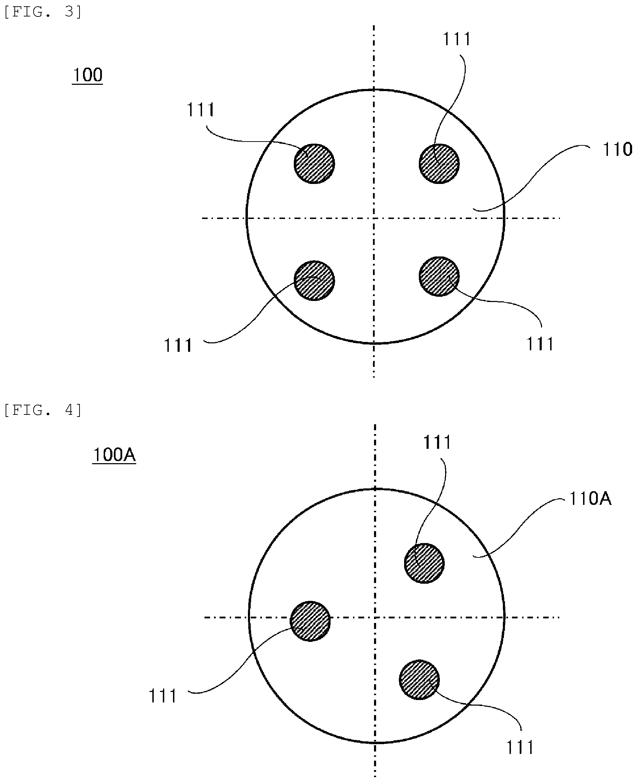

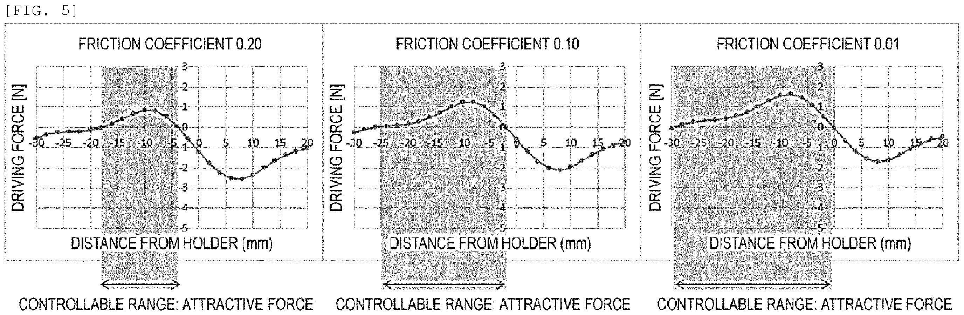

A first embodiment of a sample container carrier and a sample conveying device of the present invention will be described with reference to Figs. 1 to 5. Fig. 1 is a plan view illustrating a schematic configuration of an entire sample test automation system including the sample conveying device according to the first embodiment. Fig. 2 is a diagram illustrating a configuration of the sample conveying device. Figs. 3 and 4 are views of the configuration of the sample container carrier as viewed from the bottom surface side. Fig. 5 is a graph illustrating the relationship between the friction coefficient and the driving force when the applied current values are the same.

First, the overall configuration of the sample test automation system will be described with reference to Figs. 1 and 2.

A sample test automation system 1000 in this embodiment shown in Fig. 1 is a system including an analyzing device configured to automatically analyze components of samples such as blood and urine.

The main components of the sample test automation system 1000 includes a plurality of conveying devices 700 (twelve in Fig. 1) configured to convey, up to a predetermined destination, a container carrier 100 (refer to Fig. 2) on which a sample container 150 containing a sample (refer to Fig. 2 and the like) is mounted or an empty container carrier 100 on which the sample container 150 is not mounted, a plurality of analyzing devices 800 (four in Fig. 1), and a control computer 900 configured to integrally manage the sample test automation system 1000.

The analyzing device 800 is a unit configured to perform qualitative and quantitative analysis on a component of the sample conveyed by the conveying device 700. Analysis items in this unit are not particularly limited, and this unit can adopt a configuration of a well-known automatic analyzing device configured to analyze biochemical items and immune items. Furthermore, when the plurality of analyzing devices 800 are provided, the respective analyzing devices 800 may have the same specifications or different specifications, and are not particularly limited.

Each of the conveying devices 700 is a device that causes the container carrier to slide on a conveying path by interaction between a magnetic pole 707 (refer to Fig. 2) and a magnetic material body 105 (refer to Fig. 2) provided in the container carrier 100, and to convey the sample container 150 mounted on the container carrier 100 and configured to contain the sample up to a destination (analyzing device 800, take-out port, or the like). Details of the conveying device 700 will be described later with reference to Fig. 2 and subsequent drawings.

The control computer 900 controls the operation of the entire system including the conveying device 700 and the analyzing device 800, and the same is configured by a computer including a display device such as a liquid crystal display, an input device, a storage device, a CPU, a memory, and the like. Control of the operation of each device by the control computer 900 is executed based on various programs recorded in the storage device.

It is noted that pieces of control processing of the operation executed by the control computer 900 may be integrated into one program, may be divided into a plurality of programs, or may be a combination thereof. Further, a part or all of the programs may be implemented by dedicated hardware or may be modularized.

Here, although Fig. 1 illustrates a case in which four analyzing devices 800 are provided, the number of analyzing devices is not particularly limited, and the number thereof can be one or more. In the same manner, the number of conveying devices 700 is also not particularly limited, and the number thereof can be one or more.

In addition, the sample test automation system 1000 can include various sample pre-processing/post-processing units configured to perform pre-processing and post-processing on a sample. The detailed configuration of the sample pre-processing/post-processing unit is not particularly limited, and the configuration of a well-known pre-processing device can be adopted.

Next, the configuration of the conveying device 700 of this embodiment will be described with reference to Fig. 2.

As illustrated in Fig. 2, a sample to be tested in the sample test automation system 1000 is collected in the sample container 150 and handled in a state of being stored therein. The sample container 150 is inserted into the container carrier 100 manually by an operator or by an automatic inserting unit, and the same is conveyed through the system and subjected to various pieces of processing such as pre-processing and analysis.

As illustrated in Fig. 2, one or more container carriers 100 mounted with the sample container 150 containing the sample are provided in the conveying device 700, and each of the container carriers 100 includes the magnetic material body 105, a grip 101 configured to support the sample container 150, and a rotating body 111.

The magnetic material body 105 is provided near a bottom surface 110 of each of the plurality of container carriers 100, and the container carrier 100 is conveyed by an electromagnetic force acting on the magnetic material body 105.

The magnetic material body 105 is formed of, for example, a permanent magnet such as neodymium or ferrite, but the same can also be formed of other magnets or magnetic material bodies, and can be formed of an appropriate combination thereof.

As illustrated in Fig. 3, the plurality of rotating bodies 111 are disposed on the bottom surface 110 of the container carrier 100 so as to be in contact with a conveying surface 120, and rotate as the container carrier 100 moves.

As long as the rotating body 111 does not interfere with the independence of the container carrier 100, the number of rotating bodies 111 may be one or more. For example, as illustrated in Fig. 3, four rotating bodies 111 may be provided on the bottom surface 110, or three rotating bodies 111 may be provided on a bottom surface 110A as in a container carrier 100A illustrated in Fig. 4, and the number thereof is not particularly limited. However, since keeping the central axis of the sample container 150 perpendicular to the conveying surface 120 leads to more stable conveyance, the number of rotating bodies 111 is preferably three or more when only the rotating bodies 111 are in contact with the conveying surface 120, as shown in this embodiment.

This rotating body 111 is configured to be rotatable in a plurality of directions, and is formed of, for example, any one of a ball roller, an omni wheel, and a caster.

This rotating body 111 is mainly formed of a non-magnetic material. Examples of the non-magnetic material include aluminum, resin, and predetermined SUS. Since metals such as aluminum and SUS have high rigidity, there is an advantage that an effect of reducing a frictional force is so large that lifetime of the container carrier 100 can be extended. On the other hand, in the case of resin, although the effect of reducing a frictional force is so small that the container carrier 100 easily deteriorates, it is possible to reduce noise generated during rotation as compared with metal. In addition, since resin has a low thermal conductivity, there is an advantage that the rotating body 111 formed of resin is hardly affected by heat generation during electromagnetic conveyance.

As in the present invention, since the container carrier 100 is conveyed by an electromagnetic force in electromagnetic conveyance, the rotating body 111 is formed of a non-magnetic material, thereby making it possible to allow the rotating body 111 not to rotate during conveyance of the container carrier 100, and as such, a frictional force can be reduced.

In addition, when the plurality of rotating bodies 111 are provided, specifications of the respective rotating bodies 111 are not particularly limited. Here, in order to keep the central axis of the sample container 150 perpendicular to the conveying surface 120 and to achieve further stable conveyance, as illustrated in Fig. 2, the respective lower ends of the rotating bodies 111 in contact with the conveying surface 120 have the same specifications so that the central axis of the sample container 150 is kept perpendicular to the conveying surface 120, or specifications regarding a size and the like of the rotating body 111 are desirably determined so that an imaginary surface formed by a contact point between the rotating body 111 and the conveying surface 120 is perpendicular to the central axis of the sample container 150.

Furthermore, when the plurality of rotating bodies 111 are provided, the arrangement relationship between the rotating bodies 111 on the bottom surface 110 of the container carrier 100 is not particularly limited, and, as illustrated in Figs. 3 and 4, it is desirable that the rotating bodies 111 having the same specifications are evenly arranged on the bottom surface 110 so that the central axis of the sample container 150 is kept perpendicular to the conveying surface 120.

Referring back to Fig. 2, the container carrier 100 including the magnetic material body 105 moves so as to slide on the conveying surface 120. In order to generate a force for conveying the magnetic material body 105, the plurality of magnetic poles 707, each of which is formed of a cylindrical core 705 and a coil 706 wound around the outer periphery of the core 705, are provided below the conveying surface 120. This magnetic pole 707 forms each of a plurality of detection points configured to detect the position of the magnetic material body 105. Further, a plurality of conveying paths are provided above the magnetic pole 707 so as to cover the magnetic pole 707.

The conveying surface 120 is formed of a flat surface having a small frictional force, and the container carrier 100 slides on the upper surface of the flat surface.

In the conveying device 700 of this embodiment, the plurality of magnetic poles 707 provided therein are responsible for detecting the position of the magnetic material body 105, and the same is also responsible for conveying the magnetic material body 105, that is, conveying a sample.

The magnetic pole 707 is connected to a driving unit 708 configured to apply a predetermined voltage to the magnetic pole 707 and to allow a predetermined current to flow through the coil 706. The magnetic pole 707 to which the voltage is applied by the driving unit 708 acts as an electromagnet and attracts the magnetic material body 105 provided in the container carrier 100 on the conveying surface 120. After the container carrier 100 is attracted by the magnetic pole 707, voltage application from the driving unit 708 to the magnetic pole 707 is stopped, and a voltage is applied, in the same manner as described above, from the driving unit 708 to the next magnetic pole 707 which is different from the previous magnetic pole 707 and adjacent thereto, and as such, the magnetic material body 105 provided in the container carrier 100 is attracted by the adjacent magnetic pole 707.

This procedure is repeatedly performed on all the magnetic poles 707 forming the conveying path, thereby conveying, up to a destination, a sample stored in the sample container 150 mounted on the container carrier 100 having the magnetic material body 105 provided therein.

A calculation unit 709 uses various pieces of information such as position information, speed information, and weight information of the container carrier 100 to calculate a current flowing through each coil 706, and the same outputs a command signal to each driving unit 708. The driving unit 708 applies a voltage to the corresponding coil 706 based on the command signal.

A configuration of a detection unit 710 is not particularly limited as long as the detection unit 710 can detect the position of the sample container 150. For example, a Hall sensor configured to detect the magnetic flux of the magnetic material body 105 of the sample container 150, a length measuring device, or the like can be configured to directly measure the position of the sample container 150. Furthermore, the position of the sample container 150 can be configured to be determined indirectly by detecting a current flowing through the coil 706 of the magnetic pole 707 and the way the current flows and determining the position of the magnetic material body 105.

In addition, conveyance processing specific to a case in which the rotating body 111 is provided will be described below with reference to Fig. 5. The X-axis of a graph in Fig. 5 is a distance between the container carrier 100 (holder) and the coil 706 to which a current is applied in order to give a driving force to the container carrier 100, and the Y-axis is a simulation result of the driving force given to the container carrier 100 in consideration of the coil 706, a frictional force, and the like. In the graph in Fig. 5, it is assumed that the container carrier 100 travels from the left side to the right side of the X-axis, and a traveling direction thereof is positive. Further, a negative area of the X-axis in Fig. 5 indicates a driving force when the container carrier 100 is approaching the coil 706, and a positive area of the X-axis in Fig. 5 indicates a driving force when the container carrier 100 moves away from the coil 706.

In Fig. 5, in the state in which the container carrier 100 travels from the left side to the right side of the X-axis, when the driving force is negative, the coil 706 exerts a force on the container carrier 100 in the direction opposite the traveling direction, that is, the coil 706 serves as a brake. In other words, as illustrated in Fig. 5, in the negative area of the X-axis, when the driving force of the Y-axis is positive, a force is generated to cause the coil 706 to attract the container carrier 100, and when the driving force of the Y-axis is negative, a force is generated to cause the coil 706 to repel the container carrier 100.

Similarly, as illustrated in Fig. 5, in the positive area of the X-axis, when the driving force of the Y-axis is positive, a force is generated to cause the coil 706 to repel the container carrier 100, and when the driving force of the Y-axis is negative, a force is generated to cause the coil 706 to attract the container carrier 100.

Next, stopping of the container carrier 100 will be described. As illustrated in Fig. 5, when the friction coefficient is large, as the container carrier 100 approaches the coil 706, the driving force applied to the container carrier 100 becomes a negative value. That is, a force is applied to the container carrier 100 in the direction opposite the traveling direction, and the container carrier 100 is in a state of being braked. At the time of stopping the container carrier 100, this brake is used, thereby making it possible to stop the container carrier 100 while gradually lowering a value of a current to be applied to the coil 706 at a position where the container carrier 100 is scheduled to stop (hereinafter referred to as stop coil).

On the other hand, when the friction coefficient is small, as illustrated in Fig. 5, even if the container carrier 100 approaches the coil, the Y-axis at the position where the X-axis is 0 indicates almost 0, the brake, applied to the container carrier 100 and configured to occur when the friction coefficient is large, is almost not operated. Therefore, in a case where the same control as when the friction coefficient is large is performed, when only the value of the current to be applied to the stop coil is lowered, the container carrier 100 may not be able to stop at the position of the stop coil and may pass through the position of the stop coil.

Then, after the container carrier 100 passes through the stop coil, a force is applied to the container carrier 100 in the direction opposite the direction in which the container carrier 100 travels due to an attractive force of the stop coil, and the container carrier 100 returns to the position of the stop coil. By repeating the operation of allowing the container carrier 100 to pass through the stop coil and return to the stop coil, the container carrier 100 stops while reducing a distance that the container carrier 100 passes through the stop coil. When the container carrier 100 overshoots the stop coil, for example, a distance between the above-mentioned container carrier 100 and the container carrier 100 stopped in the previous position is reduced, and as such, contact between the container carriers 100 may cause the sample to be spilled. In addition, since the container carrier 100 is required to repeat the work of passing through the stop coil and returning to the stop coil, it takes a long time for the container carrier 100 to stop.

Therefore, in this embodiment, at the time of stopping the container carrier 100, in addition to lowering the value of the current applied to the stop coil, it is desirable to apply, when the container carrier 100 travels from the coil 706 right before the stop coil to the stop coil, a current to the coil 706 right before the stop coil with respect to the traveling direction of the container carrier 100, thereby applying a brake to the container carrier 100.

Here, although it is assumed that the coil 706 right before the stop coil is located right before the stop coil without another coil 706 interposed therebetween, conditions vary depending on the conveying speed of the container carrier 100, the weight of the container carrier 100 and the sample container 150, the current value, the material of the conveying surface, and the like. Accordingly, in order to reduce the speed of the container carrier 100, it is also possible to apply an attractive force in the direction opposite the traveling direction of the container carrier 100 from the coil 706 located before the stop coil with a plurality of other coils 706 interposed therebetween.

The friction coefficient varies depending on the material of the container carrier 100 and the conveying surface 120. Here, when the rotating body 111 is provided, a friction coefficient between the container carrier 100 and the conveying surface 120 can be reduced to about one tenth of a friction coefficient of a case in which the container carrier 100 and the conveying surface 120 directly contact each other without the rotating body 111, and thus in the present invention, stop control as described above is desired.

Next, the effects of this embodiment will be described.

In the conveying device 700 according to the first embodiment of the present invention described above, the container carriers 100 and 100A include the magnetic material body 105, the grip 101 configured to support the sample container 150, and the rotating body 111 disposed so as to be in contact with the conveying surface 120 on which the container carriers 100 and 100A are conveyed and configured to rotate as the container carriers 100 and 100A move. Further, the container carriers 100 and 100A are conveyed by an electromagnetic force acting on the magnetic material body 105.

As a result, a contact area between the conveying surface 120 and the container carrier 100 can be reduced. Further, the rotating body 111 slides along with the movement of the container carrier 100. By these effects, a frictional force generated between the bottom surface 110 and the conveying surface 120 during movement of the container carrier 100 can be reduced as compared with a case in which the rotating body 111 is not provided.

In the electromagnetic conveyance, a driving force of the container carrier 100 by a current applied from the coil 706 is reduced by the frictional force. Here, on the assumption that applied current values are equal as illustrated in Fig. 5, as the friction coefficient is smaller, "y-axis: a horizontal force acting on the container carrier 100" can be increased even if the same current values are applied. That is, it can be said that power consumption required to generate the horizontal force acting on the container carrier 100 can be reduced as the friction coefficient is smaller.

Therefore, as described in the present invention, the rotating body 111 is provided on the bottom surface 110, thereby making it possible to reduce the friction coefficient between the conveying surface 120 and the container carrier 100 and reduce the frictional force. Accordingly, it is possible to reduce power consumption required during conveyance of the container carrier 100 as compared with a case in the related art, so that the container carrier 100 can be conveyed with a smaller power source.

Further, in the electromagnetic conveyance as described in the present invention, in order to stably convey the container carrier 100, such as speed uniformity, when the "horizontal force acting on the container carrier 100" becomes negative, the coil 706 exerts a repulsive force on the container carrier 100 and it becomes difficult to control the container carrier 100. Accordingly, the "horizontal force acting on the container carrier 100" is desired to be positive.

Furthermore, a driving force exerted on the container carrier 100 is generated while switching the current applied to the coil 706. Accordingly, as the frictional force during conveyance is large, it is likely to be affected by inertia due to a frictional force when the coil 706 is switched. As a result, the conveying speed of the container carrier 100 becomes unstable, and there is a concern that a sample stored in the sample container 150 may shake.

On the other hand, as in the present invention, the rotating body 111 is provided to reduce the friction coefficient. Accordingly, as illustrated in Fig. 5, since a positive area increases in the "horizontal force acting on the container carrier 100", an area in which the container carrier 100 can be controlled only by applying a predetermined current to obtain a force for pulling the container carrier 100 is widened. Therefore, it is not necessary to apply a repulsive force at the time of controlling conveyance, thereby making it possible to stably control the speed of the container carrier 100. On the other hand, when the current to be applied is increased, the positive area can be increased, but power consumption is increased. Further, when the current to be applied is increased, the amount of heat generated by the coil 706 is increased, which may cause an increase in power consumption and may accelerate the consumption of the coil 706.

In addition, since the rotating body 111 can rotate in a plurality of directions, the same can also be used to convey the container carriers 100 and 100A two-dimensionally.

Furthermore, the rotating body 111 is either a ball roller, an omni wheel, or a caster, thereby making it possible to achieve inexpensive and highly reliable electromagnetic conveyance with reduced frictional force.

In addition, since the rotating body 111 is made of a non-magnetic material, the rotating body 111 does not act on an electromagnetic force for conveyance generated by the magnetic pole 707, thereby making it possible to prevent the operation of the rotating body 111 from being affected by the electromagnetic force. Accordingly, more stable electromagnetic conveyance can be implemented.

Furthermore, since a plurality of rotating bodies 111 are provided, electromagnetic conveyance can be implemented with a further reduced frictional force.

Additionally, at the time of stopping the container carrier 100, in addition to lowering a current value applied to the stop coil, a current is applied to the coil 706 right before the stop coil with respect to the traveling direction of the container carrier 100 when the container carrier 100 travels from the coil 706 right before the stop coil to the stop coil, and an attractive force is applied from the coil right before the stop coil to the container carrier 100 in the direction opposite the traveling direction of the container carrier 100, thereby making it possible to stably reduce the speed of the container carrier 100. That is, accordingly, even when the friction coefficient is low, it is easier to stop the container carrier 100 at the target position.

### <Second embodiment>

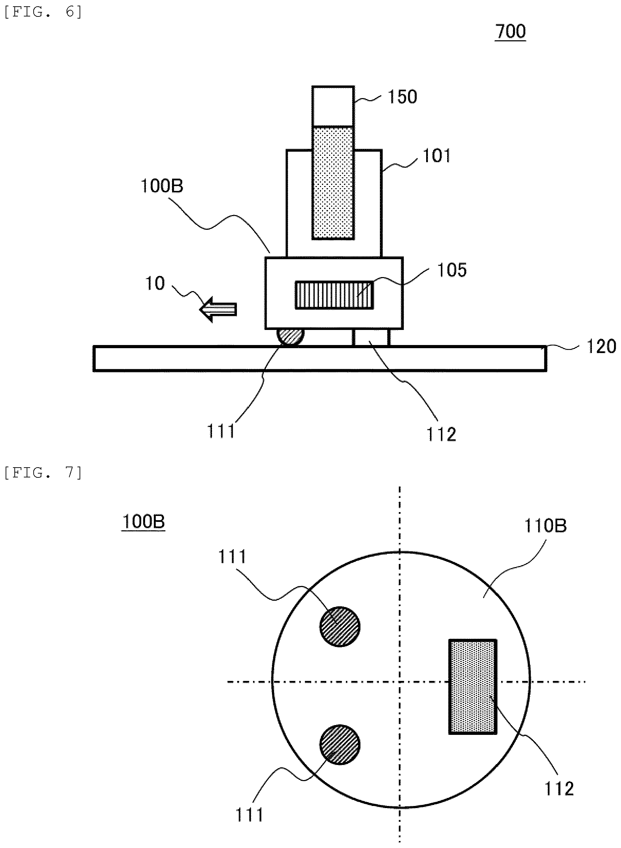

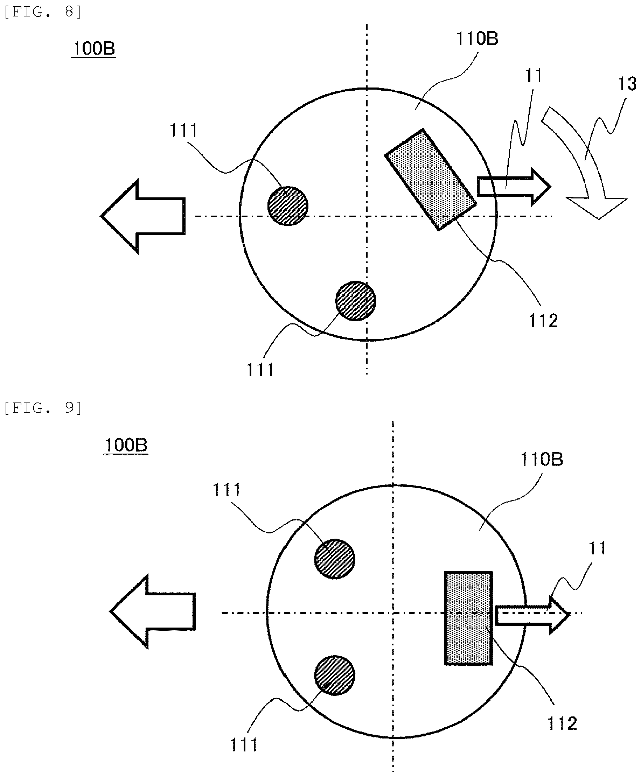

A sample container carrier and a sample conveying device according to a second embodiment of the present invention will be described with reference to Figs. 6 to 9. Fig. 6 is a diagram illustrating a configuration of the sample conveying device according to the second embodiment. Fig. 7 is a view of a configuration of the sample container carrier as viewed from the bottom surface. Figs. 8 and 9 are diagrams illustrating an operation principle of the sample container carrier as viewed from the bottom surface side of the container carrier.

As illustrated in Figs. 6 and 7, a container carrier 100B of this embodiment further includes a bottom surface protrusion 112 in contact with the conveying surface 120, the bottom surface protrusion 112 being disposed on the side of a bottom surface 110B of the grip 101, in addition to the two rotating bodies 111 on the bottom surface 110B.

As illustrated in Fig. 7, the bottom surface protrusion 112 is provided at a position facing the rotating body 111 through the central axis of the container carrier 100B, and the container carrier 100B is configured to move in a predetermined direction by a frictional force generated from the bottom surface protrusion 112.

In sample conveyance, a barcode and a two-dimensional code attached to the sample container 150 or the container carrier 100B may be read, and in this case, it is necessary to cause the barcode to directly face a reader.

Therefore, as illustrated in Fig. 6, the frictional force on the bottom surface is made eccentric by providing the bottom surface protrusion 112 and the rotating body 111 on the bottom surface 110B of the container carrier 100B.

In the container carrier 100B, when conveyance is started, as illustrated in Fig. 8, a frictional force 11 by conveyance acts in the direction of 180° of the traveling direction 10 of the container carrier 100B.

In this case, as illustrated in Fig. 8, when a direction radially outwards from the central axis of the container carrier 100B does not coincide with a direction in which the frictional force 11 acts, a side on which the rotating body 111 is provided, the side being opposite the portion of the bottom surface protrusion 112, begins to move first, and a rotational force 13 acts without movement of the bottom surface protrusion 112 side. Accordingly, the container carrier 100B rotates when the container carrier 100B travels in the conveying direction.

Then, as illustrated in Fig. 9, when the bottom surface protrusion 112 is in a state of being positioned 180° opposite the traveling direction 10, the direction radially outwards from the central axis coincides with the direction in which the frictional force 11 acts, and the component of the frictional force 11 in the direction of the rotational force 13 is eliminated. Accordingly, the container carrier 100B is conveyed up to a predetermined position in a state in which the rotation thereof is stopped and the bottom surface protrusion 112 side is disposed on the rear side in the traveling direction 10.

In this manner, since the container carrier 100B can automatically rotate as the same is conveyed, the container carrier 100B is aligned in a fixed direction with respect to the conveying direction, and for example, it is possible to cause a barcode to directly face a reader, automatically.

An area of the bottom surface protrusion 112 in contact with the conveying surface 120 is not particularly limited because the same varies depending on the material of the container carrier 100 and the conveying surface 120, the conveying speed of the container carrier 100, and the like, thereby making it possible to adjust the frictional force by adjusting the area. Accordingly, the frictional force can be appropriately designed so as to have an appropriate value according to the material of the container carrier 100 and the conveying surface 120, the conveying speed of the container carrier 100, and the like. Further, the shape thereof is also not particularly limited.

Similarly, the number of bottom surface protrusions 112 is not particularly limited. It is not necessary to provide one bottom surface protrusion 112 as illustrated in Fig. 7, and a plurality of bottom surface protrusions 112 can be provided. In this case as well, the contact area can be appropriately designed within a range in which the frictional force is adjustable.

In addition, a vertical position of the portion of the bottom surface protrusion 112 in contact with the conveying surface 120 is not particularly limited, and it is desirable to have a shape that keeps the central axis of the sample container 150 perpendicular to the conveying surface 120.

Furthermore, in the container carrier 100B of this embodiment as well, the number of rotating bodies 111 is not particularly limited, and one or more rotating bodies 111 may be required.

Other configurations and operations are substantially the same as those of the sample container carrier and the sample conveying device of the first embodiment described above, and details thereof are omitted.

The sample container carrier and the sample conveying device of the second embodiment of the present invention can also obtain substantially the same effects as those of the first embodiment described above.

Further, a certain amount of frictional force is required to control the stopping of the container carrier 100. Here, since the area of the contact surface can be adjusted by further having the bottom surface protrusion 112 in contact with the conveying surface 120, it becomes possible to adjust the friction coefficient, and conveyance control can be more accurately performed.

Additionally, since the bottom surface protrusion 112 is provided at a position facing the rotating body 111 through the central axis of the container carrier 100B, directivity can be given to the traveling direction of the container carrier 100B without increasing the friction coefficient of the entire container carrier 100. Accordingly, for example, it is possible to easily and automatically correct a direction in which the surface having a bar code directly faces a reader.

### <Others>

It is noted that the present invention is not limited to the above-described embodiments and includes various modifications. The embodiments have been described in detail to describe the present invention in an easy-to-understand manner, and are not necessarily limited to those having all the described configurations.

A part of a configuration of one embodiment can be replaced with a configuration of another embodiment, or the configuration of another embodiment can be added to the configuration of one embodiment. Further, other configurations can be added, deleted, or replaced with respect to a part of the configuration of each embodiment.

For example, the configuration of the conveying device 700 is not limited to the configuration described above, and a one-dimensional configuration in which the container carrier 100 is electromagnetically conveyed on a linear conveying path can be adopted. In this case, the rotating body 111 does not need to be rotatable in a plurality of directions, and a component such as a tire that rotates only in the conveying direction or the counter-conveying direction can be used.

### Reference Signs List

10: traveling direction
11: frictional force
13: rotational force
100, 100A, 100B: container carrier
101: grip
105: magnetic material body (magnetic material, second magnetic material body)
110, 110A, 110B: bottom surface
111: rotating body
112: bottom surface protrusion
120: conveying surface
150: sample container
700: conveying device (sample conveying device)
705: core (first magnetic material)
706: coil
707: magnetic pole
708: driving unit
709: calculation unit (control unit)
710: detection unit
800: analyzing device
900: control computer
1000: sample test automation system

## Claims

1. A sample container carrier that grips a sample container containing a sample, the sample container carrier comprising:
a magnetic material body;
a grip that supports the sample container; and
a rotating body that is disposed so as to be in contact with a conveying surface for conveying the sample container carrier and rotates as the sample container carrier moves,
wherein the sample container carrier is conveyed by an electromagnetic force acting on the magnetic material body.

2. The sample container carrier according to claim 1, wherein the rotating body can rotate in multiple directions.

3. The sample container carrier according to claim 2, wherein the rotating body is any one of a ball roller, an omni wheel, and a caster.

4. The sample container carrier according to claim 1, wherein the rotating body is configured with a non-magnetic material.

5. The sample container carrier according to claim 1, comprising a plurality of the rotating bodies.

6. The sample container carrier according to claim 1, further comprising a bottom surface protrusion that is provided on a bottom surface side of the grip, and is in contact with the conveying surface.

7. The sample container carrier according to claim 6, wherein the bottom surface protrusion is provided at a position facing the rotating body via a central axis of the sample container carrier.

8. A sample conveying device that conveys a sample container containing a sample, the sample conveying device comprising:
a sample container carrier that grips the sample container; and
a conveying unit that has a magnetic pole having a core made of a first magnetic material and a coil wound around an outer peripheral side of the core, a driving unit for supplying a current to the coil of the magnetic pole, a conveying surface where the sample container carrier slides on an upper surface thereof, and a control unit for controlling a current value supplied from the driving unit to the coil,
wherein the sample container carrier includes:
a second magnetic material body;
a grip that supports the sample container; and
a rotating body that is disposed so as to be in contact with the conveying surface and rotates as the sample container carrier moves.

9. The sample conveying device according to claim 8, wherein, when the sample container carrier is stopped, the control unit exerts a force to the sample container carrier in a direction opposite to a traveling direction of the sample container carrier by supplying a current to the magnetic pole through which the sample container carrier has passed by the driving unit.
